# EUROPEAN PATENT APPLICATION

(11) **EP 4 365 554 A1**
(43) Date of publication of application: **08.05.2024**
(21) Application number: 21948344.3
(22) Date of filing: 30.06.2021
(51) Int. Cl.: G01C 21/36

(54) **CONTENT OUTPUT DEVICE, CONTENT OUTPUT METHOD, PROGRAM, AND STORAGE MEDIUM**

(71) Applicant: Pioneer Corporation, Tokyo 113-0021 (JP)
(72) Inventor: IIZAWA, Takashi, Kawagoe-shi, Saitama 350-8555 (JP); KURAMOCHI, Keita, Tokyo 113-0021 (JP); YAMANAKA, Atsuhiro, Kawagoe-shi, Saitama 350-8555 (JP); NAGATA, Hideki, Tokyo 113-0021 (JP); TANAKA, Kazuaki, Kawagoe-shi, Saitama 350-8555 (JP); TERAO, Kyoichi, Tokyo 112-0002 (JP); KAMIMURA, Takashi, Tokyo 112-0002 (JP); WAGURI, Daiki, Tokyo 112-0002 (JP); ISHIZAKI, Yuya, Tokyo 112-0002 (JP); SUZUKI, Kei, Kawagoe-shi, Saitama 350-8555 (JP); SHIMAZU, Takayuki, Tokyo 112-0002 (JP)
(74) Representative: Viering, Jentschura & Partner mbB Patent- und Rechtsanwälte
(86) International application number: PCT/JP2021/024725
(87) International publication number: WO 2023/276037

(57) **Abstract**

The content output device includes an information acquisition unit, a content generation unit and an output unit. The information acquisition unit acquires driving state information which is information related to a current driving state of a vehicle. The content generation unit acquires one or more content elements corresponding to a trigger condition, from among a plurality of content elements combinable with each other, when the driving state information satisfies the trigger condition, and generates an output content using the acquired content elements. The output unit outputs the output content.

## Description

### TECHNICAL FIELD

The present invention relates to a technique available in a push-type contents output.

### BACKGROUND TECHNIQUE

Conventionally, there is known a push-type contents output technique which outputs, based on various information obtained through a sensor or the like, a content corresponding to the information to the user without a request from the user.

Specifically, Patent Document 1 discloses a technique for outputting, based on the information obtained through a vibration sensor or the like for detecting the opening and closing of the door of the vehicle, a greeting sound when the passenger gets on or off the vehicle.

### RELATED ART REFERENCE

### PATENT REFERENCE

Patent Reference 1: Japanese Patent Application laid-open under No. JP 2003-237453

### SUMMARY OF THE INVENTION

### PROBLEM TO BE SOLVED BY THE INVENTION

According to the push-type contents output as described above, contents not necessarily suitable for the current situation of the user may be outputted.

Therefore, for example, when the push-type contents output is applied during the driving of the vehicle, there may occur such a problem that the contents are outputted without considering the current driving situation of the vehicle.

However, Patent Document 1 does not particularly disclose a technique capable of solving the above problem. Therefore, according to the configuration disclosed in Patent Document 1, the above problem still exists.

The present invention has been made to solve the above problem, and a main object thereof is to provide a content output device capable of outputting the content at an appropriate timing corresponding to the current driving state of the vehicle in the push-type contents output.

### MEANS FOR SOLVING THE PROBLEM

An invention described in claims is a content output device comprising: an information acquisition unit configured to acquire driving state information which is information related to a current driving state of a vehicle; a content generation unit configured to acquire one or more content elements corresponding to a trigger condition, from among a plurality of content elements combinable with each other, when the driving state information satisfies the trigger condition, and generate an output content using the acquired content elements; and an output unit configured to output the output content.

Additionally, an invention described in claims is a content output method comprising: acquiring driving state information which is information related to a current driving state of a vehicle; acquiring one or more content elements corresponding to a trigger condition, from among a plurality of content elements combinable with each other, when the driving state information satisfies the trigger condition, and generating an output content using the acquired content elements; and outputting the output content.

Additionally, an invention described in claims is a program executed by a content output device including a computer to execute: acquiring driving state information which is information related to a current driving state of a vehicle; acquiring one or more content elements corresponding to a trigger condition, from among a plurality of content elements combinable with each other, when the driving state information satisfies the trigger condition, and generating an output content using the acquired content elements; and outputting the output content.

### BRIEF DESCRIPTION OF THE DRAWINGS

[FIG. 1] FIG. 1 shows a configuration example of an audio output system according to an embodiment.
[FIG. 2] FIG. 2 is a block diagram showing a schematic configuration of an audio output device.
[FIG. 3] FIG. 3 shows an example of a schematic configuration of a server device.
[FIG. 4] FIG. 4 is an example of data structure of table data stored in the server device.
[FIG. 5] FIG. 5 is another example of the data structure of the table data stored in the server device.
[FIG. 6] FIG. 6 is a flowchart for describing processing executed in the server device.

### DETAILED DESCRIPTION OF THE PREFERRED EMBODIMENTS

According to one aspect of the present invention, there is provided a content output device comprising: an information acquisition unit configured to acquire driving state information which is information related to a current driving state of a vehicle; a content generation unit configured to acquire one or more content elements corresponding to a trigger condition, from among a plurality of content elements combinable with each other, when the driving state information satisfies the trigger condition, and generate an output content using the acquired content elements; and an output unit configured to output the output content.

The content output device includes an information acquisition unit, a content generation unit and an output unit. The information acquisition unit acquires driving state information which is information related to a current driving state of a vehicle. The content generation unit acquires one or more content elements corresponding to a trigger condition, from among a plurality of content elements combinable with each other, when the driving state information satisfies the trigger condition, and generates an output content using the acquired content elements. The output unit outputs the output content. Thus, in the push-type contents output, it becomes possible to output the content at an appropriate timing according to the current driving state of the vehicle.

According to one mode of the above content output device, each of the plurality of content elements is classified into any one of a plurality of categories set according to an output order when each of the plurality of content elements is outputted to a passenger of the vehicle.

According to another mode of the above content output device, a priority according to a frequency of being outputted to the passenger is set for each of the content elements belonging to one of the plurality of categories.

According to still another mode of the above content output device, the content generation unit acquires one content element from each of the plurality of categories, and arranges the acquired content elements according to the output order to generate the output content.

According to still another mode of the above content output device, the output unit stops outputting the output content during a period in which the passenger of the vehicle is talking.

According to still another mode of the above content output device, the content generation unit generates the output content by processing a part of the acquired content element.

According to still another mode of the above content output device, the output unit outputs the output content as a push-type content.

According to still another mode of the above content output device, the trigger condition includes a plurality of conditions.

According to still another mode of the above content output device, the trigger condition does not include any behavior other than essential behavior in driving of the vehicle, from among active behavior performed by the passenger of the vehicle.

According to another aspect of the present invention, there is provided a content output method comprising: acquiring driving state information which is information related to a current driving state of a vehicle; acquiring one or more content elements corresponding to a trigger condition, from among a plurality of content elements combinable with each other, when the driving state information satisfies the trigger condition, and generating an output content using the acquired content elements; and outputting the output content. Thus, in the push-type contents output, it becomes possible to output the content at an appropriate timing according to the current driving state of the vehicle.

According to still another aspect of the present invention, there is provided a program executed by a content output device including a computer to execute: acquiring driving state information which is information related to a current driving state of a vehicle; acquiring one or more content elements corresponding to a trigger condition, from among a plurality of content elements combinable with each other, when the driving state information satisfies the trigger condition, and generating an output content using the acquired content elements; and outputting the output content. By executing the program by a computer, the above-described content output device can be realized. This program can be handled in a manner stored in a storage medium.

### EMBODIMENTS

Preferred embodiments of the present invention will be described below with reference to the attached drawings.

### [System configuration]

### (Overall configuration)

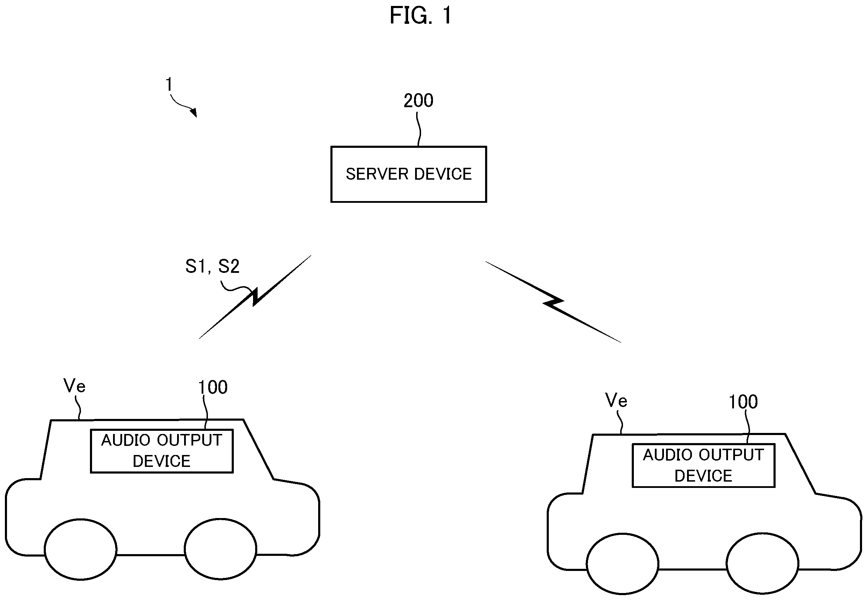

FIG. 1 is a diagram showing a configuration example of an audio output system according to an embodiment. The audio output system 1 according to the present embodiment includes audio output devices 100 and a server device 200. The audio output device 100 is mounted on a vehicle Ve. The server device 200 communicates with a plurality of audio output devices 100 mounted on a plurality of vehicles Ve.

The audio output device 100 basically performs a route search process, a route guidance process, or the like for a user who is a passenger of the vehicle Ve. For example, when a destination or the like is inputted by the user, the audio output device 100 transmits an upload signal S1 including the position information of the vehicle Ve and the information on the designated destination to the server device 200. The server device 200 refers to the map data, calculates a route to the destination, and transmits a control signal S2 indicating the route to the destination to the audio output device 100. The audio output device 100 performs the route guidance to the user by the audio output, based on the received control signal S2.

The audio output device 100 provides various kinds of information to the user by interacting with the user. For example, when the user makes an information request, the audio output device 100 supplies the server device 200 with the upload signal S1 including information indicating the content or type of the information request and information about the driving state of the vehicle Ve. The server device 200 acquires, generates, and transmits the data requested by the user to the audio output device 100 as the control signal S2 . The audio output device 100 provides the received information to the user by the audio output.

### (Audio output device)

The audio output device 100 moves with the vehicle Ve, and provides audio-based route guidance so that the vehicle Ve travels along the guidance route. Note that "audio-based route guidance" refers to the route guidance in which the user can grasp information required for driving the vehicle Ve along the guidance route at least from voice only, and does not exclude that the voice output device 100 supplementally displays a map or the like around the present position. In the present embodiment, the audio output device 100 outputs various information related to the driving, such as a point on the route at which the guidance is required (also referred to as a "guidance point"), by voice. Here, the guidance point corresponds to, for example, an intersection with a right and left turn of the vehicle Ve, or another important passing point for the vehicle Ve to travel along the guidance route. The audio output device 100 performs voice guidance about the guidance point such as the distance from the vehicle Ve to the next guidance point and the direction of travel at the guidance point, for example. Hereinafter, the guidance voice related to the guidance route is also called "route guidance voice".

The audio output device 100 is mounted, for example, on the top of a windshield or on a dashboard of the vehicle Ve. Incidentally, the audio output device 100 may be incorporated into the vehicle Ve.

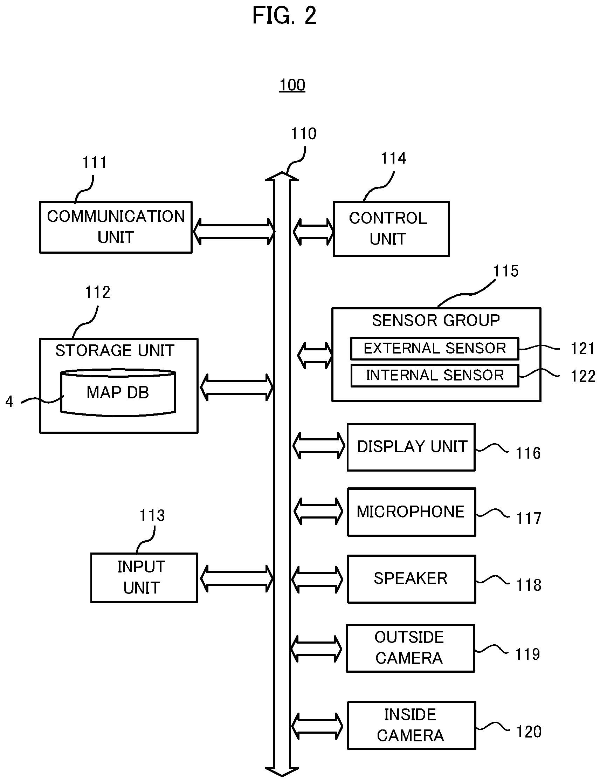

FIG. 2 is a block diagram showing the schematic configuration of the audio output device 100. The audio output device 100 mainly includes a communication unit 111, a storage unit 112, an input unit 113, a control unit 114, a sensor group 115, a display unit 116, a microphone 117, a speaker 118, an outside camera 119, and an inside camera. Each element in the audio output device 100 is connected to one another via a bus line 110.

The communication unit 111 performs data communication with the server device 200 based on the control of the control unit 114. The communication unit 111 may receive map data for updating a map DB (DataBase) 4 to be described later from the server device 200, for example.

The storage unit 112 is composed of various memories such as a RAM (Random Access Memory), a ROM (Read Only Memory), a non-volatile memory (including a hard disk drive, a flash memory, etc.). The storage unit 112 stores a program for the audio output device 100 to execute a predetermined processing. The above-described program may include an application program for performing the route guidance by voice, an application program for playing music, an application program for outputting contents (such as a TV) other than music, and the like. The storage unit 112 is also used as a working memory of the control unit 114. The program to be executed by the audio output device 100 may be stored in a storage medium other than the storage unit 112.

The storage unit 112 stores the map database (hereinafter, the database is referred to as "DB") 4. The map DB 4 stores various data required for the route guidance. The map DB 4 stores, for example, road data representing the road network by a combination of nodes and links, and facility data indicating a destination, a stopover place, or facilities that are candidates for landmarks. The map DB 4 may be updated based on the map information that the communication unit 111 receives from the map management server, under the control of the control unit 114.

The input unit 113 is a button, a touch panel, a remote controller, or the like for the user to make an operation. The display unit 116 is a display that performs display based on the control of the control unit 114. The microphone 117 collects the sound in the vehicle Ve, particularly the utterance of the driver or the like. The speaker 118 outputs a route guidance voice to the driver or the like.

The sensor group 115 includes an external sensor 121 and an internal sensor 122. The external sensor 121 is one or more sensors, such as a lidar, radar, ultrasonic sensor, infra-red sensor, sonar, and the like, for recognizing the surrounding environment of the vehicle Ve. The internal sensor 122 is a sensor that performs positioning of the vehicle Ve, and is a GNSS (Global Navigation Satellite System) receiver, a gyro sensor, an IMU (Inertial Measurement Unit), a vehicle speed sensor, or the combination thereof, for example. The sensor group 115 may include a sensor by which the control unit 114 can derive the position of the vehicle Ve directly or indirectly (i.e., by performing an estimation process) from the outputs of the sensor group 115.

The outside camera 119 is a camera for shooting the outside of the vehicle Ve. The outside camera 119 may be only a front camera that shoots the front of the vehicle, may include a rear camera that shoots the rear of the vehicle in addition to the front camera, and may be an omnidirectional camera that can shoot all around the vehicle Ve. On the other hand, the inside camera 120 is a camera for shooting the interior of the vehicle Ve, and is provided at a position capable of shooting at least the area around the driver's seat.

The control unit 114 includes a CPU (Central Processing Unit), a GPU (Graphics Processing Unit) and controls the entire audio output device 100. For example, the control unit 114 estimates the position (including the direction of the traveling direction) of the vehicle Ve based on the output of one or more sensors of the sensor group 115. When the destination is designated by the input unit 113 or the microphone 117, the control unit 114 generates the route information indicating the guidance route to the destination and performs the route guidance based on the route information, the estimated position information of the vehicle Ve, and the map DB 4. In this case, the control unit 114 outputs the route guidance voice from the speaker 118. The control unit 114 controls the display unit 116 to display information of the music being played back, video contents, or a map around the current position.

The processing executed by the control unit 114 is not limited to being implemented by software based on a program, but may be implemented by any combination of hardware, firmware, and software. The processing executed by the control unit 114 may be implemented by a user-programmable integrated circuit such as a FPGA (field-programmable gate array) or a microcomputer. In that case, the program executed by the control unit 114 in this embodiment may be realized by using this integrated circuit. Thus, the control unit 114 may be implemented by hardware other than a processor.

The configuration of the audio output device 100 shown in FIG. 2 is an example, and various changes may be made to the configuration shown in FIG. 2. For example, instead of storing the map DB 4 in the storage unit 112, the control unit 114 may receive information required for the route guidance from the server device 200 through the communication unit 111. In another example, instead of including the speaker 118, the audio output device 100 may be connected to a voice output unit configured separately from the audio output device 100 by an electrical or known communication means to output the voice from the voice output unit. In this case, the voice output unit may be a speaker provided in the vehicle Ve. In yet another example, the audio output device 100 may not include the display 116. In this case, the audio output device 100 may perform no control related to the display at all, or may perform a predetermined display on an on-vehicle display unit by electrically connecting to the on-vehicle display unit provided in a vehicle Ve by wired or wireless communication. Similarly, instead of including the sensor group 115, the audio output device 100 may acquire information outputted from the sensors attached to the vehicle Ve from the vehicle Ve, using a communication protocol such as a CAN (Controller Area Network).

### (Server device)

Based on the upload signal S1 including the destination or the like received from the audio output device 100, the server device 200 generates the route information indicating the guidance route that the vehicle Ve should travel. Then, the server device 200 generates the control signal S2 related to the information output for the information request of the user based on the information request of the user indicated by the upload signal S1 transmitted by the audio output device 100 thereafter and the traveling state of the vehicle Ve. Then, the server device 200 transmits the generated control signal S2 to the audio output device 100.

In addition, the server device 200 generate the contents for providing information to and interacting with the user of the vehicle Ve and transmits the contents to the audio output device 100. The information provision to the user is mainly a push-type content provision that starts from the server device 200 when the vehicle Ve becomes a predetermined driving state as a trigger. The interaction with the user is basically the pull-type interaction which starts from the query or question from the user. However, the interaction with users may be initiated from the push-type content provision.

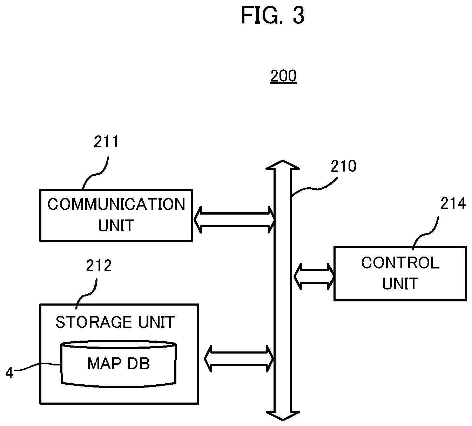

FIG. 3 is a diagram illustrating an example of the schematic configuration of the server device 200. The server device 200 mainly includes a communication unit 211, a storage unit 212, and a control unit 214. Each element in the server device 200 is interconnected via a bus line 210.

The communication unit 211 performs data communication with an external device such as the audio output device 100 based on the control of the control unit 214. The storage unit 212 is configured by various memories such as a RAM, ROM, a non-volatile memory (including a hard disk drive, a flash memory, etc.). The storage unit 212 stores a program for the server device 200 to execute predetermined processing. The storage unit 212 includes the map DB 4.

The control unit 214 includes a CPU, a GPU and the like, and controls the entire server device 200. The control unit 214 operates together with the audio output device 100 by executing a program stored in the storage unit 212, and executes a route guidance process, an information providing process, or the like for the user. For example, the control unit 214 generates the control signal S2 related to the route information indicating the guidance route or the information output in response to the information request of the user, based on the upload signal S1 received from the audio output device 100 through the communication unit 211. Then, the control unit 214 transmits the generated control signal S2 to the audio output device 100 through the communication unit 211.

### [Push-type contents provision]

Next, the push-type contents provision will be described. Push-type contents provision means that when the vehicle Ve becomes a predetermined driving state, the audio output device 100 outputs, to the user, the contents related to the driving state by voice. Specifically, the audio output device 100 acquires the driving state information indicating the driving state of the vehicle Ve based on the outputs of the sensor group 115 as described above and transmits the driving state information to the server device 200. The server device 200 stores table data for the push-type contents provision in the storage unit 212. The server device 200 refers to the table data. When the driving state information received from the audio output device 100 mounted on the vehicle Ve matches the trigger condition prescribed in the table data, the server device 200 generates the output content using the script corresponding to the trigger condition, and transmits the output content to the audio output device 100. The audio output device 100 outputs the output content received from the server device 200 by voice. In this way, the contents corresponding to the driving state of the vehicle Ve are outputted to the user by voice.

### (Data Structure)

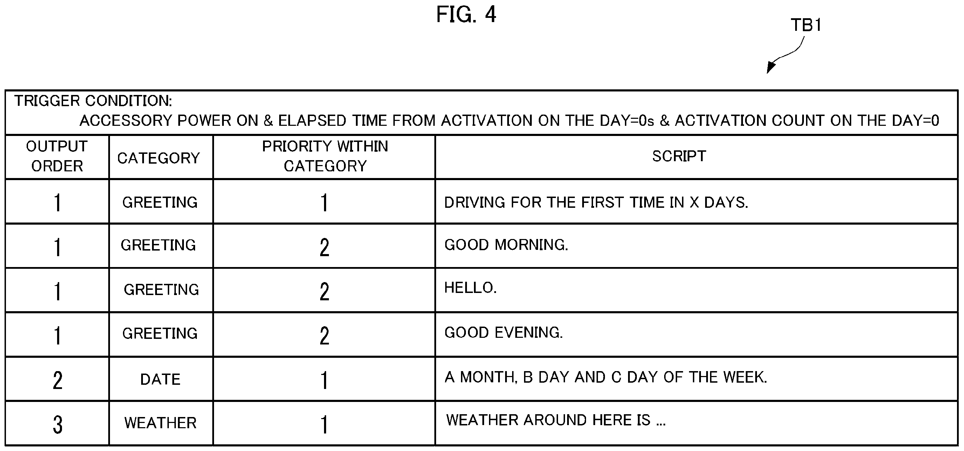

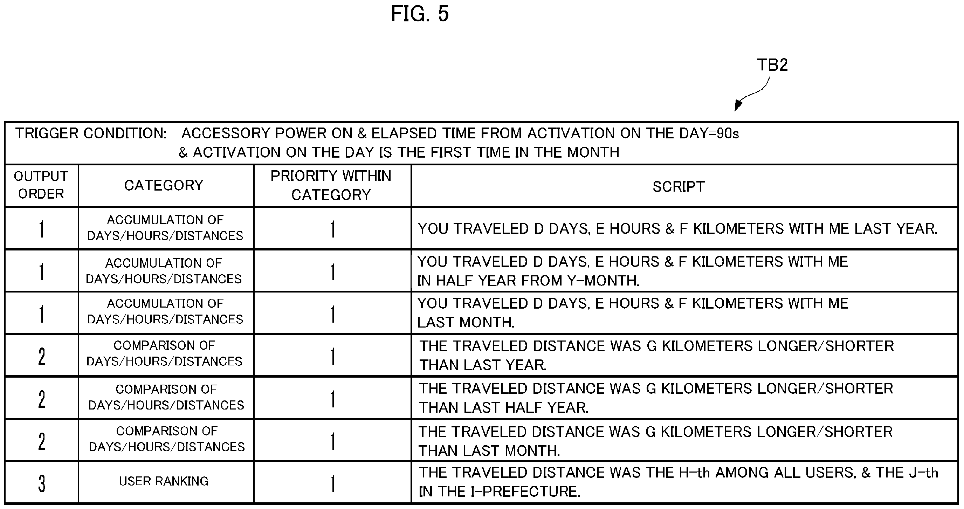

FIGS. 4 and 5 are diagrams illustrating examples of a data structure of table data, which is used for performing the push-type contents provision and which is stored in the server device 200.

The storage unit 212 of the server device 200 stores table data TB1 as shown in FIG. 4, for example.

The "trigger condition" of the table data TB1 includes one or more conditions that should be satisfied by the driving state information, which is the information related to the driving state of the vehicle.

The trigger condition in the push-type contents provision is a condition related to the driving state information of the vehicle Ve detected by the sensor group 115 or the like, and basically does not include the utterance by the passenger of the vehicle Ve. In addition, the trigger condition does not include any behavior, among the active behavior by the passenger, other than the behavior essential for the operation of the vehicle Ve. Specifically, in the present embodiment, for example, the trigger condition includes the operation related to the opening/closing of the door by the passenger of the vehicle Ve, but does not include the utterance by the passenger. Note that the conversation triggered by the passenger's utterance is performed as a pull-type conversation as described above.

The above-described driving state information may include, for example, at least one of information that can be acquired based on the functions of each part of the audio output device 100, such as the position of the vehicle Ve, the orientation of the vehicle Ve, the traffic information around the position of the vehicle Ve (including the speed regulation and the congestion information, etc.), the present time, the destination, and the like. Also, the driving state information may include any one of the voice obtained by the microphone 117 (excluding the utterance of the user), the image captured by the outside camera 119, and the image captured by the inside camera 120. Further, the driving state information may include information received from the server device 200 through the communication unit 111.

The table data TB1 prescribes the correspondence between the trigger condition and the script that is outputted when the driving condition of the vehicle Ve satisfies the trigger condition. The table data TB1 of FIG. 4 prescribes the scripts that are outputted when the vehicle Ve is first activated on that day. Specifically, the trigger condition is prescribed as an AND condition of "Accessory power ON", "Elapsed time from the activation on the day = 0s" and "Activation count on the day = 0". Further, for the trigger condition, "scripts" are prescribed in association with "Output order", "Category", and "Priority within category".

"Scripts" indicate sentences that are outputted by voice from the audio output device 100 to the passengers of the vehicle Ve. The "script" corresponds to the smallest unit of utterance outputted from the audio output device 100 to the passengers of the vehicle Ve, and the combination of one or more scripts is outputted to the user by voice as the "content". That is, the speech content for the user is prepared as the units of the scripts as shown in FIG. 4, and one or more scripts are outputted as the content. Incidentally, the "script" corresponds to a content element constituting at least a part of the output content outputted from the audio output device 100 to the passengers of the vehicle Ve. For each script, its attributes such as "Output order", "Category", and "Priority within category" are prescribed.

"Output order" indicates the order in which "script" is outputted by voice. That is, the "script" is created as a sentence that can be combined with each other within the number corresponding to the maximum number of "Output order". Specifically, the output content is generated by combining the script of the output order "1", the script of the output order "2", and the script of the output order "3".

"Category" is set as a classification category that indicates the type to which the meaning of the script belong. Specifically, the category "greeting" indicates that the meaning of the script is a greeting to the user. Similarly, the category "date" indicates that the meaning of the script is information about the date of the day, and the category "weather" indicates that the meaning of the script is information about the weather of the day.

"Priority within category" indicates the priority order according to the frequency at which each "script" belonging to one "category" is outputted by voice. Incidentally, among the "scripts" belonging to one "category", the scripts having the same priority number in the "Priority within category " may be outputted at the same frequency.

Next, an example of the output content generated on the basis of the table data TB1 of FIG. 4 will be described. Now, when the driving state information of the vehicle Ve satisfies the trigger condition prescribed in the table data TB1, the server device 200 first selects a script "Driving for the first time in X days" for which the priority within category is "1" among four scripts having the output order "1". Next, the server device 200 selects one of three scripts "Good morning.", "Hello." and "Good evening." whose output order is "1" and whose priority within category is "2", based on the time at that time. Next, the server device 200 selects the script "A month, B day, and C day of the week" whose output order is "2", and then selects the script "Weather around here is ..." whose output order is "3". Then, the server device 200 generates the output content by arranging the four selected scripts according to their output order and transmits the content to the audio output device 100.

In the above-described example, the server device 200 includes all of the scripts having the output order "1" to "3" prescribed in the table data TB1 into the content. However, this is not indispensable, and the content may be generated by excluding the script corresponding to a certain output order. For example, in the example of FIG. 4, the server device 200 may generate the content excluding the script "A month, B day, and C day of the week" having the output order "2".

FIG. 5 is a diagram illustrating an example of a data structure of another table data for the push-type information provision. The table data TB2 of FIG. 5 prescribes the scripts that are outputted 90 seconds after the first activation of the vehicle Ve in that month. Specifically, the trigger condition is prescribed as an AND condition of "Accessory power ON", "Elapsed time from activation on the day = 90s", and "Activation on the day is the first time in the month".

Similarly, in the example of FIG. 5, the "scripts" are defined in association with "Output order", "Category," and "Priority within category" for the trigger condition. In the example of FIG. 5, "Accumulation of days/hours/distance", "Comparison of days/hours/distance" and "User ranking" are defined as "category". A script whose category is "Accumulation of days/hours/distance" is information about the cumulative days, cumulative hours, and cumulative distance the user has driven the vehicle Ve. A script whose category is "Comparison of days/hours/distances" is information about the result of comparing the number of days, hours or distances that the user has driven the vehicle Ve with another time period such as a month, half a year, one year, etc. A script whose category is "User ranking" is information indicating the ranking of the distance that the user has driven the vehicle Ve in a particular population (all users, users in the same prefecture).

Next, an example of the output content generated on the basis of the table data TB2 of FIG. 5 will be described. Assuming that the driving state information of the vehicle Ve satisfies the trigger condition defined in the table data TB2, the server device 200 first selects one of three scripts having the output order "1" and the priority within category "1". For example, the server device 200 selects the script "You traveled D days, E hours, and F kilometers with me last year." Next, the server device 200 selects one of three scripts having the output order "2" and the priority within the category "1". For example, the server device 200 selects the script "The traveled distance was G kilometers longer than last year." Next, the server device 200 selects the script "The traveled distance was the H-th among all users, and the J-th in the I-prefecture." having the output order "3." Then, the server device 200 arranges the three selected scripts according to their output orders to generate the output content, and transmits the content to the audio output device 100.

In the table data TB2 of FIG. 5, the scripts are generated by processing the driving state information of the vehicle Ve. Specifically, the scripts corresponding to the category "Accumulation of days/hours/distances" and "Comparison of days/hours/distance" include actual data of the driving states acquired in the vehicle Ve such as "days", "hours", and "distances" of the user's driving. Thus, by generating the output content using the script including actual data of the driving state, it becomes possible to provide the content suitable for the actual driving state.

As described above, according to the present embodiment, a plurality of scripts to be outputted to the user by voice are prepared in correspondence with the trigger conditions related to the driving state of the vehicle Ve. The server device 200 combines a plurality of scripts to generate a content and transmits the content to the audio output device 100 for audio output to the user. In this way, by generating content by combining multiple scripts, it is not necessary to prepare a large number of long-sentenced contents, thereby making the content creation more efficient.

Further, each script is provided in a manner structured by attributes such as "Output order", "Category", and "Priority within category", and the server device 200 can select a script from a plurality of scripts of the same output order and the same priority to create the content, as necessary. Thus, when the content of the same matter and/or meaning is generated, it becomes possible to make a difference in the contents so that the user does not get used to it or get tired of it.

The server device 200 may process a part of the acquired script when generating the output content. By changing the phrasing of the script, it is possible to give variations to the contents. For example, when acquiring a script of "It was a driving for K minutes." as the output content, the server device 200 may process the script to "It was a travel for L hours M minutes." In this case, the server device 200 may process the script such that the above-described "K minutes" and "L hours M minutes" represent the same length of time. Further, the server device 200 may change the script of "It was a driving of K minutes." to "It was a travel of K minutes." or to "It was a long travel of X minutes." when X minutes is longer than a predetermined time.

Further, the server device 200 may give a variation to the content by, for example, adding words to the first or last word of the script included in the table data or changing the expression of the first word or the last word. For example, when acquiring a script of "Good morning." as the output content, the server device 200 may process the script to "Good morning, Mr. P." In this instance, the server device 200 may process the script so that "Mr. P" described above may represent a pre-registered name or an assumed name of the passenger of the vehicle Ve.

Further, the server device 200 may add a word to the beginning of the script of "It was a driving of K minutes." to generate the script "Today, it was a driving of K minutes.", or may change the end of the script to generate the script "It was a driving of K minutes, right?". In addition, the server device 200 may change the script "Speed Limit is changed to Ykm" to the script "Speed Limit is increased to Ykm" when the speed limit is increased and to the script "Speed Limit is decreased to Ykm" when the speed limit is decreased, based on variations in the actual speed limit."

### (Processing flow)

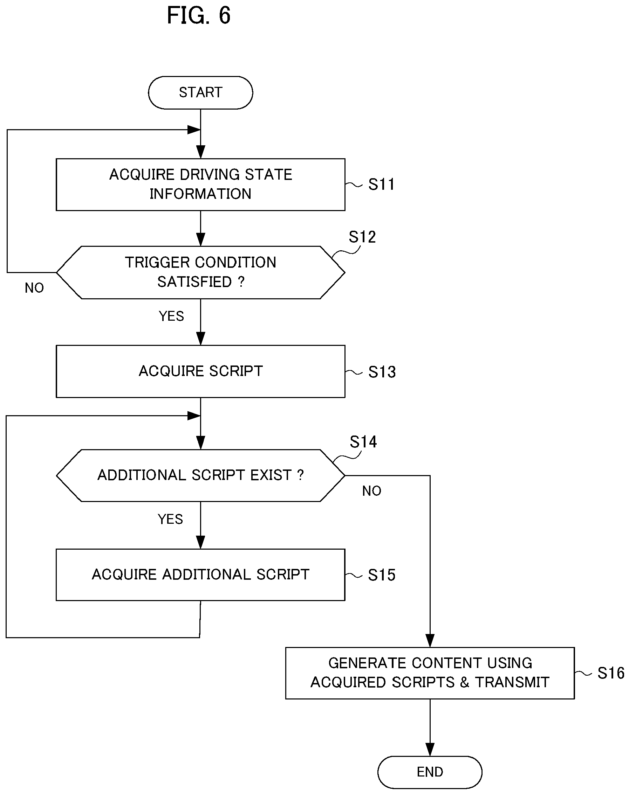

FIG. 6 is a flowchart illustrating processing performed in the server device 200. In the following description, it is assumed that both the table data TB1 and TB2 described above are stored in the storage unit 212.

First, the control unit 114 of the audio output device 100 acquires the driving state information that is the information related to the present driving state of the vehicle Ve and transmits the driving state information to the server device 200. The server device 200 acquires the driving state information from the audio output device 100 (step S11).

Next, the control unit 214 of the server device 200 refers to the table data TB1 and TB2 stored in the storage unit 212 and determines whether or not the driving state information acquired in step S11 satisfies any one of the trigger condition of the table data TB1 and TB2 (step S12).

Next, the control unit 214 performs the process of step S11 again when it is determined that the driving state information acquired in step S11 does not satisfy the table data TB1 and TB2 (step S12: NO).

On the other hand, when the control unit 214 determines that the driving state information acquired in step S11 satisfies one of the trigger conditions of the table data TB1 and TB2 (step S12: YES), the control unit 214 acquires the first script from one of the table data corresponding to the determination result (hereinafter, referred to as "table data TBX".) (step S13).

Specifically, the control unit 214 acquires one script belonging to the category whose output order is "1" in the table data TBX (hereinafter referred to as "SC1.") as the first script.

Next, the control unit 214 determines whether or not there is an additional script to be outputted after the first script acquired in step S13 in the table data TBX (step S14). Specifically, the control unit 214 determines whether or not there is a script whose output order is larger than the script acquired in step S13 and step S15 (described later) in the table data TBX.

The control unit 214 performs the process of step S16 described later, when it is determined that there is no additional script in the table data TBX (step S14: NO).

On the other hand, when it is determined that there is an additional script in the table data TBX, the control unit 214 acquires an additional script from the table data TBX (step S15). Specifically, the control unit 214 acquires the script having the output order larger than the already acquired script SC1 in the table data TBX as an additional script (hereinafter referred to as "SCZ"). Then, the control unit 214 returns to step S14.

That is, the control unit 214 acquires the additional script as long as the additional script exists, according to the output order in the table data TBX, and when all the additional scripts are acquired, the process goes to step S16.

Then, the control unit 214 arranges the one or more scripts acquired in steps S13 to S15 according to the output orders in the table data TBX to generate the output content and transmits the content to the audio output device 100 (step S16). Thus, the generation of the content by the server device 200 ends. The audio output device 100 outputs the content received from the server device 200 to the passengers of the vehicle Ve by voice.

According to the above-described processing, for example, when the driving state information of the vehicle Ve satisfies the trigger condition of the table data TB1, the control unit 214 acquires "Good morning." as the script SC1, acquires "A month, B days, and C day of the week." as the script SC2, and acquires "Weather around here is ..." as the script SC3. The control unit 214 generates the output content including the script SC1, SC2 and SC3 and transmits the content to the audio output device 100. Incidentally, for example, when the elapsed days X from the previous driving by the user is less than a predetermined number of days (e.g., 4 days), even if the priority within category "Greeting" has been set to "1", the control unit 214 may avoid acquiring the sentence "Driving at the first time in X days" included in the table data TB1.

Further, according to the above-described processing, for example, when the driving state information of the vehicle Ve satisfies the trigger condition of the table data TB2, the control unit 214 acquires "You traveled D days, E hours and F kilometers with me last month." as a script SC1, acquires "The traveled distance was G kilometers longer than last year." as a script SC2, and acquires "The traveled distance was the H-th among all users, and the J-th in the I-prefecture." as a script SC3. Then, the control unit 214 generates the output content including the scripts SC1, SC2 and SC3 and transmits the output content to the audio output device 100.

That is, according to the present embodiment, the control unit 214 of the server device 200 has functions as an information acquisition unit and a content generation unit. Further, according to the present embodiment, the communication device 211 of the server device 200, or the combination of the the communication device 211 of the server device 200 and the speaker 118 of the audio output device 100 has a function as an output unit.

As described above, according to this embodiment, when the driving state information satisfies the trigger condition, it is possible to acquire at least one content element corresponding to the trigger condition as the output content, from among a plurality of content elements combinable with each other. Therefore, according to this embodiment, it is possible to output the content corresponding to the current driving state of the vehicle at an appropriate timing in the push-type contents output.

### (Modifications)

Modifications to the above embodiment will be described below.

According to the present embodiment, the control unit 114 of the audio output device 100 may have a function as a content output control unit that controls at least one of the output state and the output mode of the output content for the passengers of the vehicle Ve, based on the driving state information.

For example, when the passengers of the vehicle Ve are talking, the control unit 114 may perform a process for stopping the output of the output content to the passengers on the basis of the sound in the vehicle Ve obtained by the microphone 117.

In the above-described embodiments, the program can be stored using various types of non-transitory computer-readable medium and supplied to a controller or the like that is a computer. The non-transitory computer-readable medium includes various types of tangible storage medium. Examples of the non-transitory computer-readable medium include a magnetic storage medium (e.g., a flexible disk, a magnetic tape, a hard disk drive), a magneto-optical storage medium (e.g., a magneto-optical disk), a CD-ROM (Read Only Memory), a CD-R, a CD-R/W, a solid-state memory (e.g., a mask ROM, a PROM (Programmable ROM), an EPROM (Erasable PROM), a flash ROM, and a RAM (Random Access Memory)).

While the present invention has been described with reference to the embodiments, the present invention is not limited to the above embodiments. Various modifications that can be understood by a person skilled in the art within the scope of the present invention can be made to the configuration and details of the present invention. That is, the present invention includes, of course, various modifications and modifications that may be made by a person skilled in the art according to the entire disclosure and technical concepts including the scope of claims. In addition, each disclosure of the above-mentioned patent documents cited shall be incorporated by reference in this document.

### BRIEF DESCRIPTION OF REFERENCE NUMBERS

100 Audio output device
200 Server device
111, 211 Communication unit
112, 212 Storage unit
113 Input unit
114,214 Control unit
115 Sensor group
116 Display
117 Microphone
118 Speaker
119 Outside camera
120 Inside camera

## Claims

1. A content output device comprising:
an information acquisition unit configured to acquire driving state information which is information related to a current driving state of a vehicle;
a content generation unit configured to acquire one or more content elements corresponding to a trigger condition, from among a plurality of content elements combinable with each other, when the driving state information satisfies the trigger condition, and generate an output content using the acquired content elements; and
an output unit configured to output the output content.

2. The content output device according to claim 1, wherein each of the plurality of content elements is classified into any one of a plurality of categories set according to an output order when each of the plurality of content elements is outputted to a passenger of the vehicle.

3. The content output device according to claim 2, wherein a priority according to a frequency of being outputted to the passenger is set for each of the content elements belonging to one of the plurality of categories.

4. The content output device according to claim 2 or 3, wherein the content generation unit acquires one content element from each of the plurality of categories, and arranges the acquired content elements according to the output order to generate the output content.

5. The content output device according to any one of claims 1 to 4, wherein the output unit stops outputting the output content during a period in which the passenger of the vehicle is talking.

6. The content output device according to any one of claims 1 to 5, wherein the content generation unit generates the output content by processing a part of the acquired content element.

7. The content output device according to any one of claims 1 to 6, wherein the output unit outputs the output content as a push-type content.

8. The content output device according to any one of claims 1 to 7, wherein the trigger condition includes a plurality of conditions.

9. The content output device according to any one of claims 1 to 8, wherein the trigger condition does not include any behavior other than essential behavior in driving of the vehicle, from among active behavior performed by the passenger of the vehicle.

10. A content output method comprising:
acquiring driving state information which is information related to a current driving state of a vehicle;
acquiring one or more content elements corresponding to a trigger condition, from among a plurality of content elements combinable with each other, when the driving state information satisfies the trigger condition, and generating an output content using the acquired content elements; and
outputting the output content.

11. A program executed by a content output device including a computer to execute:
acquiring driving state information which is information related to a current driving state of a vehicle;
acquiring one or more content elements corresponding to a trigger condition, from among a plurality of content elements combinable with each other, when the driving state information satisfies the trigger condition, and generating an output content using the acquired content elements; and
outputting the output content.

12. A storage medium storing the program according to claim 11.
